# DEMANDE DE BREVET EUROPEEN

(11) **EP 0 733 592 A1**
(43) Date de publication de la demande: **25.09.1996**
(21) Numéro de dépôt: 96400516.9
(22) Date de dépôt: 13.03.1996
(51) Int. Cl.: C01F 17/00

(54) **Procédé de préparation de sulfures de terres rares à partir d'halogénures**

(30) Priorité: 22.03.1995 FR 9503325
(71) Demandeur: RHONE-POULENC CHIMIE, 92408 Courbevoie Cédex (FR)
(72) Inventeur: Macaudiere, Pierre, 92600 Asnieres-sur-Seine (FR); Pescher, Yvette, 92220 Bagneux (FR)
(74) Mandataire: Dubruc, Philippe

(57) **Abrégé**

La présente invention concerne un procédé de préparation d'un sulfure de terre rare qui est caractérisé en ce qu'on met en présence un halogénure de terre rare et un halogénure d'alcalin ou d'aluminium et on chauffe en présence de sulfure d'hydrogène à une température suffisante pour volatiliser lesdits halogénures.

L'halogénure peut être plus particulièrement un chlorure. La terre rare peut être plus particulièrement le cérium et l'alcalin le sodium.

## Description

La présente invention concerne un procédé de préparation de sulfures de terres rares à partir d'halogénures de terres rares.

Les sulfures de terres rares peuvent être employés notamment comme pigments minéraux. Les pigments minéraux de coloration sont déjà largement utilisés dans de nombreuses industries notamment dans celles des peintures, des matières plastiques, des cosmétiques, des bétons et des céramiques.

Les compositions à base de sulfures de terres rares se sont avérées être des substituts particulièrement intéressants aux pigments existants à base de métaux lourds (cadmium, plomb, chrome, cobalt notamment).

Compte tenu de l'intérêt que présentent dès lors de telles compositions, il est important de pouvoir disposer de plusieurs procédés de préparation de ces sulfures.

L'objet de la présente invention est un nouveau procédé de préparation de sulfures de terres rares.

Dans ce but, le procédé de préparation, selon l'invention, d'un sulfure de terre rare est caractérisé en ce qu'on met en présence un halogénure de terre rare et un halogénure d'alcalin ou d'aluminium et on chauffe en présence de sulfure d'hydrogène à une température suffisante pour volatiliser lesdits halogénures.

D'autres caractéristiques, détails et avantages de l'invention apparaîtront encore plus complètement à la lecture de la description qui va suivre, ainsi que d'un exemple concret mais non limitatif destiné à l'illustrer.

Le procédé de l'invention utilise comme produits de départ un halogénure de terre rare et un halogénure d'alcalin ou d'aluminium.

Par terre rare on entend les éléments du groupe constitué par l'yttrium et les éléments de la classification périodique de numéro atomique compris inclusivement entre 57 et 71.

L'halogénure d'alcalin ou d'aluminium est utilisé pour volatiliser l'halogénure de terre rare.

L'halogénure peut être plus particulièrement un chlorure.

La terre rare peut être plus particulièrement le cérium et l'alcalin le sodium.

De préférence, on utilise des halogénures anhydres. Il est possible de mélanger les halogénures l'un avec l'autre.

L'autre réactif utilisé dans le procédé de l'invention est le sulfure d'hydrogène.

Le sulfure d'hydrogène peut être utilisé tel quel, éventuellement en mélange avec un gaz inerte comme l'argon ou l'azote.

Selon un mode de réalisation particulier de l'invention, on forme le sulfure d'hydrogène in situ par circulation sur du soufre d'un gaz contenant de l'hydrogène. Ce gaz peut être l'hydrogène ou un mélange d'hydrogène et d'un gaz inerte comme décrit précédemment.

Dans le cas de ce mode de réalisation et selon une variante de l'invention, on peut disposer les réactifs d'une manière particulière dans le réacteur en plaçant en amont par rapport au sens de circulation du gaz précité l'halogénure de terre rare et l'halogénure d'alcalin ou d'aluminium et en aval le soufre. Le sulfure d'hydrogène est alors formé par rétrodiffusion du soufre dans le réacteur. Cette manière d'opérer permet d'éviter la sulfuration de l'halogénure de terre rare avant sa volatilisation.

Selon un deuxième mode de réalisation, on peut mettre en oeuvre le procédé dans un réacteur constitué, par exemple, par un premier tube dans lequel circule un flux d'H₂S.

On peut prévoir, par ailleurs, un second réacteur, de type tubulaire notamment, dans lequel sont disposés les halogénures et où circule un courant d'azote. Ce second réacteur débouche dans le premier. Le second réacteur peut être, par exemple, situé à l'intérieur du tube constitué par le premier réacteur et il peut se terminer par une partie aval effilée débouchant dans ce dernier. A la sortie du second réacteur, sortie qui est placée en zone chaude du premier, se déroulera la réaction de sulfuration par mélange des flux sortant du premier et du second réacteur.

L'intérêt de ce second mode de réalisation est de permettre d'obtenir des produits de fine granulométrie, inférieure par exemple à 1µm.

Le procédé est mis en oeuvre en chauffant le milieu réactionnel à une température suffisante pour volatiliser les halogénures. Cette température peut par exemple être comprise entre 700 et 1200°C. Dans le cas de la variante décrite plus haut, on peut réguler la température à l'intérieur du réacteur de manière que celui-ci présente un première zone amont par rapport au sens de circulation du gaz à une température permettant la volatilisation (700-1050°C par exemple) et dans laquelle seront placés les halogénures, puis une seconde zone aval à une température plus élevée (900-1200°C par exemple) pour favoriser au maximum la réaction de sulfuration et une troisième zone en aval dans laquelle sera placé le soufre, la température de cette zone étant supérieure à celle de vaporisation du soufre.

Le procédé de l'invention peut être mis en oeuvre dans tout dispositif convenable.

Le procédé, tel que décrit, permet l'obtention de sulfures de terres rares de structures variées en fonction de la terre rare et ne contenant pas ou peu d'oxygène, ceci en fonction des conditions opératoires.

Dans le cas du cérium, on peut obtenir les sulfures α (Ce₂S₃), β (Ce₁₀S₁₄OₓS₁₋ₓ) et γ(Ce₂S₃).

Le fait de travailler en l'absence d'oxygène et à partir d'halogénures anhydres favorise la formation des structures α et γ.

Les sulfures obtenus par le procédé de l'invention peuvent être utilisés comme pigments colorants.

Ainsi, et plus précisément encore, ils peuvent être utilisés dans la coloration de matières plastiques qui peuvent être du type thermoplastiques ou thermodurcissables.

Comme résines thermoplastiques susceptibles d'être colorées selon l'invention, on peut citer, à titre purement illustratif, le chlorure de polyvinyle, l'alcool polyvinylique, le polystyrène, les copolymères styrène-butadiène, styrène-acrylonitrile, acrylonitrile-butadiène-styrène (A.B.S.), les polymères acryliques notamment le polyméthacrylate de méthyle, les polyoléfines telles que le polyéthylène, le polypropylène, le polybutène, le polyméthylpentène, les dérivés cellulosiques tels que par exemple l'acétate de cellulose, l'acéto-butyrate de cellulose, l'éthylcéllulose, les polyamides dont le polyamide 6-6.

Concemant les résines thermodurcissables pour lesquelles les sulfures selon l'invention conviennent également, on peut citer, par exemple, les phénoplastes, les aminoplastes notamment les copolymères urée-formol, mélamine-formol, les résines époxy et les polyesters thermodurcissables.

On peut également mettre en oeuvre les sulfures issus du procédé de l'invention dans des polymères spéciaux tels que des polymères fluorés en particulier le polytétrafluoréthylène (P.T.F.E.), les polycarbonates, les élastomères silicones, les polyimides.

Dans cette application spécifique pour la coloration des plastiques, on peut mettre en oeuvre les sulfures de l'invention directement sous forme de poudres. On peut également, de préférence, les mettre en oeuvre sous une forme pré-dispersée, par exemple en prémélange avec une partie de la résine, sous forme d'un concentré pâte ou d'un liquide ce qui permet de les introduire à n'importe quel stade de la fabrication de la résine.

Ainsi, les sulfures selon l'invention peuvent être incorporés dans des matières plastiques telles que celles mentionnées ci-avant dans une proportion pondérale allant généralement soit de 0,01 à 5% (ramenée au produit final) soit de 40 à 70% dans le cas d'un concentré.

Les sulfures issus du procédé de l'invention peuvent être également utilisés dans le domaine des peintures et lasures et plus particulièrement dans les résines suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyt-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy; les résines silicones.

Généralement, les sulfures sont mis en oeuvre à raison de 5 à 30% en poids de la peinture, et de 0,1 à 5% en poids du lasure.

Enfin, les sulfures selon l'invention sont également susceptibles de convenir pour des applications dans l'industrie du caoutchouc, notamment dans les revêtements pour sols, dans l'industrie du papier et des encres d'imprimerie, dans le domaine de la cosmétique, ainsi que nombreuses autres utilisations comme par exemple, et non limitativement, les teintures, dans les cuirs pour le finissage de ceux-ci et les revêtements stratifiés pour cuisines et autres plans de travail, les céramiques et les glaçures.

Les produits issus du procédé de l'invention peuvent aussi être utilisés dans la coloration des matériaux à base de ou obtenu à partir d'au moins un liant minéral.

Ce liant minéral peut être choisi parmi les liants hydrauliques, les liants aériens, le plâtre et les liants du type sulfate de calcium anhydre ou partiellement hydraté.

Par liants hydrauliques, on entend les substances ayant la propriété de faire prise et de durcir après addition d'eau en formant des hydrates insolubles dans l'eau. Les produits de l'invention s'appliquent tout particulièrement à la coloration des ciments et bien entendu des bétons fabriqués à partir de ces ciments par addition à ceux-ci d'eau, de sable et/ou de graviers.

Dans le cadre de la présente invention, le ciment peut, par exemple, être du type alumineux. On entend par là tout ciment contenant une proportion élevée soit d'alumine en tant que telle soit d'aluminate soit des deux. On peut citer à titre d'exemple les ciments à base d'aluminate de calcium, notamment ceux du type SECAR.

Le ciment peut aussi être du type silicate et plus particulièrement à base de silicate de calcium. On peut donner à titre d'exemple les ciments PORTLAND et, dans ce type de ciments, les Portland à prise rapide ou très rapide, les ciments blancs, ceux résistant aux sulfates ainsi que ceux comprenant des laitiers de hauts-fourneaux et/ou des cendres volantes et/ou du méta-kaolin.

On peut aussi mentionner les ciments à base d'hémihydrate, de sulfate de calcium ainsi que les ciments magnésiens dits ciments de Sorel.

Les produits issus du procédé de l'invention s'appliquent aussi à la coloration des liants aériens, c'est à dire des liants durcissant à l'air libre par l'action du CO₂, du type oxyde ou hydroxyde de calcium ou de magnésium.

lls s'appliquent enfin à la coloration du plâtre et des liants du type sulfate de calcium anhydre ou partiellement hydraté (CaSO₄ et CaSO₄, 1/2H₂O).

Les sulfures de terre rare de l'invention peuvent enfin être utilisés comme produits réfractaires pour la métallurgie en absence totale d'oxygène. Ils peuvent ainsi servir à la fabrication de creusets par frittage.

Un exemple va être donné ci-dessous.

### EXEMPLE

On utilise un réacteur tubulaire de longueur 1m placé dans un four. Le tube est alimenté par de l'argon hydrogéné à 10% en volume avec un débit de 5l/h. On dispose dans ce réacteur et dans une première nacelle un mélange de chlorures anhydres comprenant 5,1g de CeCl₃ et 16,9g de NaCl. On dispose dans une deuxième nacelle en aval 45g de soufre.

La montée en température se fait à 500°C/h et on observe un palier de 6 heures à une température de 1200°C pour la zone de réaction. Lors du palier, la première nacelle est située dans une zone du réacteur à une température de 1000°C, la seconde dans une zone à 450°C.

On recueille en fin de réaction des grains de sulfure de cérium β.

## Revendications

1. Procédé de préparation d'un sulfure de terre rare, caractérisé en ce qu'on met en présence un halogénure de terre rare et un halogénure d'alcalin ou d'aluminium et on chauffe en présence de sulfure d'hydrogène à une température suffisante pour volatiliser lesdits halogénures.

2. Procédé selon la revendication précédente, caractérisé en ce qu'on forme le sulfure d'hydrogène in situ par circulation sur du soufre d'un gaz contenant de l'hydrogène.

3. Procédé selon la revendication précédente, caractérisé en ce que le gaz précité est un mélange d'hydrogène et d'un gaz inerte.

4. Procédé selon la revendication 2 ou 3, caractérisé en ce qu'on place en amont, par rapport au sens de circulation du gaz précité, l'halogénure de terre rare et l'halogénure d'alcalin ou d'aluminium et en aval le soufre.

5. Procédé selon la revendication 1, caractérisé en ce qu'on place les halogénures dans un réacteur où circule un courant d'azote et on fait déboucher le flux issu de ce réacteur dans un autre réacteur où circule un flux d'H₂S.

6. Procédé selon l'une des revendications précédentes, caractérisé en ce que l'halogénure est un chlorure.

7. Procédé selon l'une des revendications précédentes, caractérisé en ce que l'alcalin est le sodium.

8. Procédé selon l'une des revendications précédentes, caractérisé en ce que la terre rare est le cérium.
